# EUROPEAN PATENT APPLICATION

(11) **EP 4 678 518 A1**
(43) Date of publication of application: **14.01.2026**
(21) Application number: 25188162.9
(22) Date of filing: 08.07.2025
(51) Int. Cl.: B62D 35/02, B62D 37/02

(54) **ROAD-USE MOTOR VEHICLE**

(30) Priority: 11.07.2024 IT 202400016120
(71) Applicant: FERRARI S.p.A., 41100 Modena (IT)
(72) Inventor: SANCHEZ GOMEZ, Isaac Joaquin, 41100 MODENA (IT); BALLATORE, Marco, 41100 MODENA (IT)
(74) Representative: Studio Torta S.p.A.

(57) **Abstract**

A road-use motor vehicle (1) comprising: a vehicle-vehicle body (2) provided with a plurality of ground-resting wheels (3, 4); a powertrain adapted to drive into rotation at least one of said ground-resting wheels (3, 4); an underbody (5), which is arranged to cover, or is integrated into, the lower part of the vehicle-vehicle body (2) so as to directly face the ground; at least one pair of side skirts (10), which have a ribbonlike structure, are flag-hinged to the underbody (5) on opposite sides of a vehicle vertical midplane (M) so as to vary their incline with respect to the vertical, and are adapted to prevent the airflows that flow along the lateral sides of the vehicle from reaching the central area of the underbody (5); and an electronic drive system (11), which is adapted to rotate said side skirts (10) so as to vary the ground distance (d) of the distal longitudinal edges (10a) of the same side skirts (10).

## Description

### CROSS-REFERENCE TO RELATED PATENT APPLICATIONS

This application claims priority to Italian Patent Application No. 102024000016120 filed on 11 July 2024, the contents of which are hereby incorporated by reference.

### TECHNICAL FIELD

The present invention relates to a road-use motor vehicle.

More specifically, the present invention preferably relates to a high-performance road-use passenger car, to which the following disclosure will make explicit reference without thereby losing generality.

### BACKGROUND ART

As is known, high-performance road-use passenger cars are usually provided with a series of front and/or rear spoilers, which serve to generate a high vertical load (downforce) at high speeds, so as to increase the grip of the tyres on the ground.

Unfortunately, the presence of spoilers increases the aerodynamic drag coefficient of the motor vehicle, that is the resistance to the forward movement of the motor vehicle, with all the problems that this entails when the passenger cars is an electrically-propelled passenger cars.

The charging times of the battery pack of an electrically propelled passenger car are, in fact, still significantly longer than the time required to fill up the tank of a passenger car provided with an internal combustion engine, thus all manufacturers of electrically-propelled passenger cars seek to optimise the consumption of electric energy in order to maximise the range of the vehicle.

Clearly, in the case of high-performance electrically-propelled passenger cars, the desire/need to maximise the range of the vehicle is in conflict with the need to have, at least at high speeds, a high vertical aerodynamic load (downforce).

In the past, some manufacturers of racing cars have developed solutions that allow the vertical aerodynamic load (downforce) of the vehicle to be increased without excessively increasing its aerodynamic drag coefficient.

Among the best-known aerodynamic solutions there is that of equipping the underbody of the passenger car with a flat floor, which usually ends at the rear in a diffuser.

When the vehicle is in motion at high speed, the flat shape of the underbody generates, beneath the passenger car, a depression (low-pressure air zone) which, in turn, generates a vertical force that tends to press the passenger car to the ground (downforce).

In addition, in order to further increase the vertical aerodynamic load (downforce) of the passenger car, the underbody with flat floor has often been combined with a pair of rigid vertical bands, traditionally called skirts, which extend parallel to the longitudinal axis of the vehicle, along the right and left sides of the underbody, and are fixed to the underbody so as to extend cantilevered downwards up to graze the ground, so as to prevent the disturbed airflows that flow along the lateral sides of the passenger car from gliding underneath it, reducing the downforce effect of the underbody with a flat floor.

Unfortunately, while the underbody with flat floor has been transferred also to mass-produced high-performance road-use passenger cars, the use of skirts is made impossible by the multitude of humps, dips, depressions and other asperities and imperfections of the road surface, which characterise any urban or suburban road intended for the circulation of public and/or private motor vehicles for the transport of goods and/or people.

Impacts against the asperities of the road surface, in fact, would irreparably destroy the skirts after just a few kilometres of travel.

In addition, the presence of the skirts may make the sale of the passenger car impossible in some countries, where approval regulations provide that the passenger car must have, under static conditions, a minimum ground clearance greater than a predetermined limit value.

### SUMMARY OF THE INVENTION

Aim of the present invention is to solve all technical problems connected to the skirts, which make their installation impossible on road-use passenger cars, advantageously with electric or hybrid propulsion.

In accordance with the above aims, according to the present invention there is provided a road-use motor vehicle as defined in Claim 1 and preferably, though not necessarily, in any of the claims dependent thereon.

### BRIEF DESCRIPTION OF THE DRAWINGS

The present invention will now be described with reference to the accompanying drawings, which illustrate a non-limiting embodiment thereof, in which:
- Figure 1 is a front view of a road-use passenger car realized according to the teachings of the present invention, with parts in transparency and parts removed for clarity's sake;
- Figure 2 is a perspective view of the underside of the passenger car shown in Figure 1, with parts removed for clarity's sake; whereas
- Figure 3 is a perspective view of the actuating assembly of the retractable side skirts, which the passenger car shown in the previous figures is provided with.

### DETAILED DESCRIPTION OF THE EMBODIMENTS

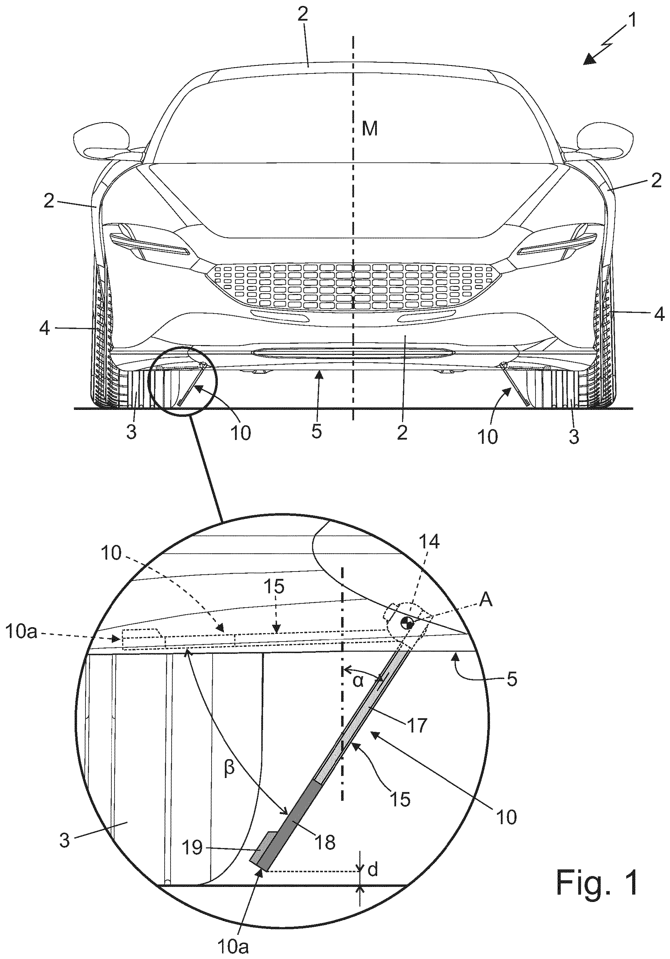

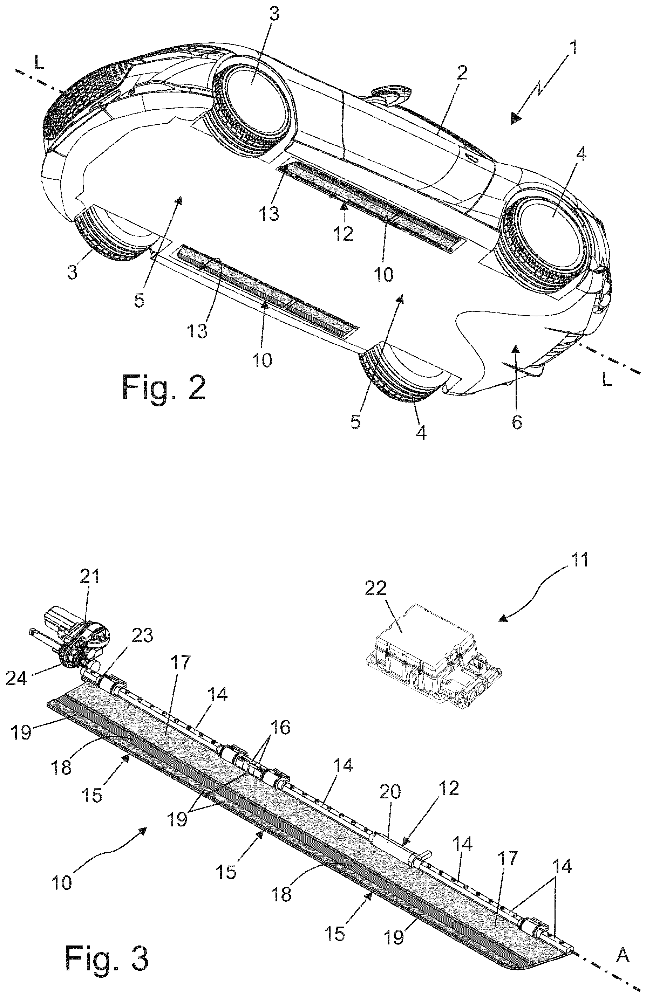

With reference to Figures 1 and 2, number 1 denotes as a whole a road-use motor vehicle, preferably with electric or hybrid propulsion, which is provided with ground-resting wheels and is advantageously suitable for transporting goods and/or people.

In more detail, the motor vehicle 1 is preferably a road-use passenger car, i.e. a road motor vehicle for the private transport of persons.

The motor vehicle 1, in particular, is provided with a rigid vehicle-body 2, preferably with a self-supporting structure, which rests on the ground by means of a plurality of advantageously tyred, ground-resting wheels, and is provided with a passenger compartment structured and dimensioned to accommodate the vehicle driver (i.e. the person who drives the road vehicle) and preferably also at least one passenger advantageously located alongside the same driver.

In addition, the motor vehicle 1 comprises: a powertrain (not shown in the figures), which is located on the vehicle-body 2, or more advantageously within the vehicle-body 2, and is adapted to drive into rotation at least one or, more conveniently, at least one pair of said ground-resting wheels; and at least one electronic vehicle-control unit (not shown in the figures), which is located on the vehicle-body 2, or more advantageously within the vehicle-body 2, receives and processes the commands given by the vehicle driver, for example via the accelerator pedal (not shown in the figures), and is adapted to command the powertrain as a function of such commands.

More specifically, the vehicle-body 2 is preferably oblong in shape, and preferably rests on the ground via at least one pair of front wheels 3 and at least one pair of rear wheels 4. Preferably, the vehicle-body 2 is furthermore mainly made of metallic and/or composite material.

The front wheels 3 and the rear wheels 4, on the other hand, are preferably arranged on the vehicle-body 2 in pairs on opposite sides of the vertical midplane of the vehicle M, advantageously substantially at the vertices of a rectangle or an isosceles trapezium. Furthermore, the passenger compartment of vehicle-body 2 is preferably located between the front wheels 3 and the rear wheels 4.

In addition, the front wheels 3 are preferably idle and steerable wheels, whereas the rear wheels 4 are preferably drive and optionally also steerable wheels.

In other words, the powertrain is preferably adapted to drive into rotation solely the rear wheels 4.

In a different embodiment, however, the powertrain could be adapted to drive into rotation the front wheels 3 in addition to, or in place of, the rear wheels 4.

In other words, the front wheels 3 may be drive wheels in addition to, or in place of, the rear wheels 4.

Preferably, the powertrain is furthermore an electric or hybrid powertrain.

In other words, the powertrain preferably comprises: at least one electric motor which is placed on the vehicle-body 2, or more advantageously within the vehicle-body 2, and is adapted to drive into rotation the front wheels 3 and/or the rear wheels 4; a rechargeable-type electric energy accumulator, which is placed on the vehicle-body 2, or more advantageously within the vehicle-body 2, and is capable of storing, inside itself, a given quantity of electric energy to be supplied to the electric motor or motors; and an electrical power unit, which is placed on the vehicle-body 2, or more advantageously within the vehicle-body 2, is interposed between the electric energy accumulator and the electric motor or motors, and is adapted to control/regulate the flow of electric energy towards the electric motor or motors preferably on the basis of the commands coming from the electronic vehicle control unit.

In other words, the electronic vehicle control unit is adapted to command the electrical power unit as a function of the commands given by the vehicle driver.

With reference to Figures 1 and 2, in addition the motor vehicle 1 is provided with an underbody 5, which is arranged to cover, or is integrated into, the lower part of the vehicle-body 2 so as to directly face the ground, and is preferably shaped/structured so as to increase the vertical aerodynamic load (downforce) acting on the motor vehicle 1.

In other words, the underbody 5 is preferably shaped/ structured so as to cause, when the motor vehicle 1 is in motion, a depression (reduction of the air pressure) in the area beneath the motor vehicle 1, which in turn increases the vertical aerodynamic load acting on the motor vehicle 1.

More specifically, the underbody 5 preferably has a substantially flat profile, and advantageously ends at the rear in a diffuser 6 with a diverging profile.

With reference to Figures 1, 2 and 3, the motor vehicle 1 furthermore comprises at least one pair of movable side skirts 10, which are located on the underbody 5 on opposite sides of the vehicle vertical midplane M, and are structured so as to selectively protrude cantilevered from the underbody 5 towards the underlying ground, in order to prevent the (disturbed) airflows that flow along the lateral sides of the motor vehicle 1 from reaching the central area of the underbody 5.

In more detail, the side skirts 10 are oblong in shape and extend longitudinally along the underbody 5, one spaced alongside the other on opposite sides of the vehicle vertical midplane M, so as to flank/skirt the central part of the underbody 5 on opposite sides thereof.

Even more specifically, the movable side skirts 10 are preferably substantially parallel to the vehicle longitudinal axis L, and are preferably arranged on the underbody 5 in a substantially specular position on opposite sides of the vehicle vertical midplane M.

Furthermore, the side skirts 10 preferably have a flexible ribbonlike structure, so as to withstand possible impacts with road irregularities, and are flag-hinged to the underbody 5 so as to vary their incline with respect to the vertical and, consequently, their distance from the underlying ground.

In other words, each movable side skirt 10 has a proximal longitudinal edge and a distal longitudinal edge opposite to one another.

The proximal longitudinal edge of the side skirt 10 is preferably arranged substantially flush with the underbody 5, and is firmly fixed to the underbody 5 with the capability of freely rotating relative to the latter. The distal longitudinal edge 10a of the side skirt 10, in turn, is capable of moving vertically between the underbody 5 and the underlying ground.

The motor vehicle 1 additionally comprises an electronic drive system 11, which is placed on the vehicle-body 2, or more advantageously within the vehicle-body 2, and is adapted to autonomously rotate the side skirts 10 so as to vary/ modify the distance from the ground of the side skirts 10, or more precisely the ground distance d of the distal longitudinal edges 10a of the side skirts 10.

In addition, the electronic drive system 11 is preferably also adapted to autonomously vary/control the (angular) position of the side skirts 10 on the basis of one or more physical quantities and/or vehicle parameters relating to motor vehicle 1.

Preferably, the physical quantities and/or vehicle parameters furthermore comprise, for example, quantities relating to the motion of the vehicle (speed and/or acceleration) and/or parameters relating to the stance of the vehicle (ground clearance, roll angle) and/or parameters relating to the condition of the road surface (presence of humps, dips, depressions and other asperities and imperfections of the road surface) and/or quantities relating to the environment surrounding the vehicle (air temperature and/or humidity, precipitation and/or other ongoing atmospheric events, etc.).

Clearly, the electronic drive system 11 may also vary the ground distance d of the side skirts 10 on the basis of commands given directly by the vehicle driver.

In addition, the electronic drive system 11 is preferably also adapted to vary, in real time, the angular position of the side skirts 10, so as to continuously maintain the ground distance d of the side skirts 10, or rather the ground distance d of the distal longitudinal edge 10a of the side skirts 10, at a predetermined target value.

With reference to Figures 1, 2 and 3, in particular, each side skirt 10 is flag-hinged to the underbody 5 so as to rotate about a rotation axis A advantageously substantially horizontal and/or parallel to the vehicle longitudinal axis L , between a raised position and a fully lowered position.

In the raised position (see Figures 1 and 2), the ground distance d of the side skirt 10, or rather of the distal longitudinal edge 10a of the side skirt 10, assumes the maximum value.

In the fully lowered position (see Figure 1), on the other hand, the ground distance d of the side skirt 10, or rather the ground distance d of the distal longitudinal edge 10a of the side skirt 10, assumes the minimum value. Preferably, the minimum value of distance d moreover ranges between 0,5 and 5 cm (centimetres) and more conveniently between 0,5 and 2 cm.

In more detail, in the fully lowered position the side skirt 10 projects cantilevered from the underbody 5 and extends towards the underlying ground up to arrive almost grazing the underlying ground, so as to prevent the disturbed airflows that flow along the lateral side of motor vehicle 1 from reaching the area at centre of the underbody 5.

Even more specifically, in the fully lowered position the side skirt 10 projects cantilevered from the underbody 5 and preferably extends obliquely towards the ground up to arrive almost grazing the underlying ground. In the fully lowered position, moreover, the inclination angle α with respect to the vertical is preferably greater than 15° and more conveniently ranges between 30° and 45°.

In other words, in the fully lowered position the side skirts 10 are inclined with respect to the vertical.

In the raised position (see Figures 1 and 2), on the other hand, the side skirt 10 preferably extends substantially parallel to and/or skimming the underbody 5, i.e. it is substantially horizontal and/or parallel to the underlying ground. Preferably, in the raised position, the inclination angle α with respect to the vertical is moreover greater than 80° and more conveniently ranges between 85° and 90°.

In other words, in the raised position the side skirts 10 are preferably substantially coplanar with the underbody 5.

Preferably, each side skirt 10 is moreover fixed/hinged to the underbody 5 so that, in the raised position and, advantageously, also in the fully lowered position, the distance of its rotation axis A from the vehicle vertical midplane M is greater than the distance of its distal longitudinal edge 10a from the same vehicle vertical midplane M.

In other words, in changing from the completely lowered position to the raised position, the side skirts 10 rotate (fold up) towards the outside, i.e. to the opposite side with respect to vehicle vertical midplane M.

The electronic drive system 11, in turn, is preferably adapted to autonomously rotate the side skirts 10 between said raised position and said fully lowered position.

In addition, the electronic drive system 11 is preferably adapted to rotate the movable side skirts 10 between said raised position and said fully lowered position as a function of said one or more physical quantities and/or vehicle parameters.

In more detail, the electronic drive system 11 is preferably adapted to rotate the movable side skirts 10 between said raised position and said fully lowered position as a function of the vehicle speed and/or the vehicle ground clearance and, optionally, also as a function of the vehicle lateral acceleration, the condition of the road surface (i.e. the presence of humps, dips, depressions and other asperities and imperfections of the road surface), the vehicle roll angle and/or other parameters relating to the stance of the motor vehicle 1.

Preferably, the electronic drive system 11 is moreover adapted to vary, in real time, the angular position of the side skirts 10, so as to continuously maintain the ground distance d of the side skirts 10, or more precisely the ground distance d of the distal longitudinal edge 10a of the side skirts 10, at a target value advantageously equal to said minimum value.

With reference to Figures 2 and 3, preferably the motor vehicle 1 additionally comprises, for each side skirt 10, an elastic counteracting assembly 12, which is structured so as to elastically bring and maintain the respective side skirt 10 in a predetermined angular position.

The electronic drive system 11 is therefore configured to rotate the side skirts 10 by overcoming the resistance of the elastic counteracting assemblies 12.

More specifically, the elastic counteracting assembly 12 is preferably structured so as to elastically bring and maintain the corresponding side skirt 10 in said raised position.

The electronic drive system 11, in turn, is preferably adapted to shift/move away the side skirts 10 from the respective raised position by overcoming the resistance of the respective elastic counteracting assemblies 12.

With reference to Figures 1 and 2, preferably the movable side skirts 10 are furthermore placed within respective housing seats 13, which are formed in the underbody 5 and/or in the vehicle-body 2 on opposite sides of the vehicle vertical midplane M, advantageously in a specular position with respect to the latter.

When in the raised position (see Figures 1 and 2), the movable side skirts 10 are preferably substantially entirely contained within their respective housing seats 13. When in the fully lowered position (see Figure 1), on the other hand, the movable side skirts 10 project cantilevered outside their respective housing seats 13 so as to arrange their distal longitudinal edge 10a at the minimum distance d from the underlying ground.

With particular reference to Figures 1, 2 and 3, in particular, the movable side skirts 10 are preferably located on the underbody 5, between the front wheels 3 and the rear wheels 4. In other words, the side skirts 10 are preferably located on the central section of the underbody 5.

In addition, each side skirt 10 preferably comprises: a support shaft 14, which extends coaxially to axis A more or less grazing the underbody 5, and is firmly fixed to the underbody 5 and/or to the vehicle-body 2, advantageously inside the housing seat 13, with the capability of freely rotating about its longitudinal axis; and at least one flat panel 15 with a ribbonlike structure, which is fixed with its edge to the support shaft 14 so as to be roughly coplanar to the support shaft 14 and to rotate about axis A together with the same shaft.

Preferably, the flat panel 15 moreover has a flexible structure so as to withstand possible impacts with road-surface irregularities.

More specifically, the flat panel 15 preferably has a substantially elongated rectangular shape, and is provided with a proximal longitudinal edge and a distal longitudinal edge, opposite each other. The proximal longitudinal edge of the panel is firmly fixed to the support shaft 14, preferably by means of a plurality of connecting screws. The distal longitudinal edge of the panel, on the other hand, contributes to forming the distal longitudinal edge 10a of the side skirt 10.

In the example shown, in particular, the support shaft 14 is preferably longitudinally divided into a plurality of separate and independent segments, which are butt-connected to one other in angularly rigid manner via a drive joints 16 of known type. Preferably, each segment of the support shaft 14 moreover supports a respective flat panel 15.

The or each ribbonlike flat panel 15, on the other hand, is preferably rigidly fixed to the support shaft 14 in a slightly eccentric position with respect to rotation axis A.

The or each ribbonlike flat panel 15 preferably moreover comprises a strip 17 advantageously made of plastic or composite material, which is directly anchored to the support shaft 14 and optionally incorporates a high-strength longitudinal slat 18, which has a structure resistant to impacts and/or abrasions and contributes to forming the distal longitudinal edge 10a of the side skirt 10.

Preferably, the or each flat panel 15 moreover comprises a longitudinal reinforcing rib 19, which is firmly fixed to the rigid or semi-rigid strip 17, or rather to the high-strength longitudinal slat 18, close to the distal longitudinal edge of the flat panel 15, so as to locally stiffen/reinforce said flat panel 15.

With reference to Figures 2 and 3, in turn, the elastic counteracting assembly 12 preferably includes a torsion spring 20, which is advantageously fitted onto the support shaft 14, and is adapted to elastically bring and maintain the support shaft 14 in a predetermined angular position that advantageously arranges the planar panel or panels 15 flush (substantially coplanar) with the underbody 5, i.e. in a substantially horizontal position, advantageously within the housing seat 13.

The electronic drive system 11, on the other hand, preferably comprises: a pair of advantageously electrically operated, actuators 21 which are placed on the vehicle-body 2, or more advantageously within the vehicle-body 2, and are adapted to rotate, on command, each a respective movable side skirt 10 about its rotation axis A; and an electronic control unit 22, which commands the actuators 21 so to vary the ground distance d of the movable side skirts 10, advantageously separately from one another.

In more detail, the actuators 21 are preferably rotary actuators.

The electronic control unit 22, moreover, is preferably programmed/configured so as to rotate, advantageously autonomously, the side skirts 10 between said raised position (see figures 1 and 2) and said fully lowered position (see figure 1).

In more detail, the electronic control unit 22 is preferably programmed/configured so as to autonomously rotate the side skirts 10 between said raised position and said fully lowered position as a function of said physical quantity or quantities and/or vehicle parameters.

Even more specifically, the electronic control unit 22 is preferably programmed/configured so as to autonomously rotate the side skirts 10 between said raised position (see figures 1 and 2) and said fully lowered position (see figure 1) as a function of the vehicle speed and/or of the vehicle ground clearance and, optionally, also as a function of the vehicle lateral acceleration, of the condition of the road surface (i.e. of the presence of humps, dips, depressions and other asperities and imperfections of the road surface), of the vehicle roll angle and/or of other parameters relating to the stance of motor vehicle 1.

In addition, the electronic control unit 22 is preferably also programmed/configured so as to rotate, in real time, the side skirts 10, so as to continuously maintain the ground distance d of the side skirts 10, or more precisely the ground distance d of the distal longitudinal edge 10a of both side skirts 10, at a predetermined target value, advantageously equal to said minimum value.

Preferably, the electronic control unit 22 is finally connected to and/or controlled by the electronic vehicle control unit.

In addition, the electronic drive system 11 preferably moreover comprises, for each side skirt 10, a position sensor that is adapted to detect, advantageously in real time or periodically, the angular position of the movable side skirt 10 with respect to the vertical or other fixed reference.

The electronic control unit 22, in turn, is preferably adapted to command the actuators 21 also as a function of the signals arriving from said position sensors.

In the example shown, in particular, the position sensor preferably includes an encoder 23 or another angular position transducer, which is fitted on the support shaft 14 and is capable of determining, advantageously in real time or periodically, the angular position of the support shaft 14 with respect to a fixed angular reference.

Preferably, the electronic drive system 11 finally comprises, for each side skirt 10, a decoupling device 24, which is interposed between the side skirt 10 and the corresponding actuator 21, and is structured to automatically, and advantageously also temporarily, disengage/ disconnect the side skirt 10 from the actuator 21 so as to allow the side skirt 10 to rotate freely about axis A, when the torque transmitted to and from the actuator 21 exceeds a predetermined maximum threshold.

More specifically, the decoupling device 24 is preferably structured so as to disengage/disconnect the side skirt 10 from the rotary actuator 21 when the side skirt 10 is subjected to an impulsive torque (for example caused by an impact with the road surface) that would tend to move/ rotate the side skirt 10 from the position set by the actuator 21.

With reference to Figure 3, in the example shown, in particular each (rotary) actuator 21 is preferably mechanically connected to the support shaft 14 of the corresponding side skirt 10 advantageously by means of a gear reducer, and is preferably adapted to rotate, on command, the side skirt 10 about its rotation axis A advantageously by a maximum predetermined angle β, which is preferably less than 90° and more conveniently comprised between 40° and 70°.

The automatic decoupling device 24, on the other hand, preferably comprises a torque limiter coupling, a clutch, a torsion spring or another similar mechanical member, which is advantageously interposed between the rotary actuator 21, or more precisely the gear reducer, and the support shaft 14 of the side skirt 10.

Operation of motor vehicle 1 is easily inferable from the above and does not require further explanation.

As regards in turn the electronic drive system 11, it can lower or raise the side skirts 10 when the motor vehicle 1 moves at a speed respectively higher or lower than a predetermined reference value.

The advantages connected to the presence of the movable-on-command side skirts 10 are remarkable.

Firstly, the side skirts 10 may be lowered only when the vehicle speed and/or the conditions of the road surface make their use reasonable and safe.

In addition, the flag movement of the side skirts 10 eliminates a significant portion of the problems resulting from impact with the road surface.

In event of an impact of the side skirt 10 with protrusions of the road surface, in fact, the side skirt 10 can freely rotate upwards, assisted also by the elastic counteracting assembly 12 if present.

The electronic control unit 22 can detect the change of position of the side skirt 10 thanks to the position sensor of the side skirt 10 and, with a predetermined timing, can return the side skirt 10 back to its original position by appropriately commanding the corresponding (rotary) actuator 21.

It is finally clear that modifications and variations may be made to the motor vehicle 1 without thereby departing from the scope of the present invention.

For example, in a more sophisticated embodiment, the flat panel 15 may have a flexible structure with different flexural rigidity for the two faces of the panel.

More specifically, the flat panel 15 can advantageously be structured so as to have a lower flexural rigidity when the external force tends to flex/curve the flat panel 15 upwards so as to move the distal longitudinal edge 10a of the side mini-skirt 10 away from the underlying ground.

In other words, the flat panel 15 may advantageously be structured so as to have a lower flexural rigidity on the side facing away from the vehicle vertical midplane M.

Finally, in a different embodiment, the side skirts 10 may have a rigid or semi-rigid ribbonlike structure.

In other words, the flat panels 15 may have a rigid or semi-rigid ribbonlike structure.

## Claims

1. A road-use motor vehicle (1) comprising: a vehicle-body (2) provided with a plurality of ground-resting wheels (3, 4); a powertrain adapted to drive into rotation at least one of said ground-resting wheels (3, 4); an underbody (5), which is arranged to cover, or is integrated into, the lower part of the vehicle body (2) so as to directly face the ground; and at least one pair of side skirts (10), which are arranged on the underbody (5) on opposite sides of a vehicle vertical midplane (M), and are adapted to prevent the airflows that flow along the lateral sides of the vehicle from reaching the central area of the underbody (5);
the motor vehicle (1) being **characterised in that** said side skirts (10) have a ribbonlike structure and are flag-hinged to the underbody (5) so as to be able to vary their incline with respect to the vertical; **and in that** it additionally comprises an electronic drive system (11), which is adapted to rotate said side skirts (10) so as to vary the ground distance (d) of the distal longitudinal edges (10a) of said side skirts (10).

2. The motor vehicle according to Claim 1, wherein said electronic drive system (11) is adapted to vary the position of the side skirts (10) on the basis of one or more physical quantities and/or vehicle parameters.

3. The motor vehicle according to Claim 1 or 2, wherein the side skirts (10) are movable between a raised position and a fully lowered position in which the ground distance (d) of the side skirts (10) assumes the minimum value; the electronic drive system (11) being adapted to move the side skirts (10) between said raised position and said fully lowered position.

4. The motor vehicle according to Claim 3, wherein the side skirts (10), when in the fully lowered position, are inclined with respect to the vertical by a predetermined angle (α).

5. The motor vehicle according to any one of the preceding claims, wherein the electronic drive system (11) is adapted to rotate, in real time, said side skirts (10) so as to continuously maintain the ground distance (d) at a predetermined target value.

6. The motor vehicle according to any one of the preceding claims, **characterised in that** it is additionally provided with elastic assemblies (12) which are adapted to bring and maintain, in elastic manner, the side skirts (10) in a predetermined angular position.

7. The motor vehicle according to Claim 6, wherein the predetermined angular position is said raised position.

8. The motor vehicle according to any one of the preceding claims, wherein said electronic drive system (11) comprises: a pair of actuators (21) that are adapted to rotate, on command, each a respective side skirt (10) about its rotation axis (A); and an electronic control unit (22) that commands the actuators (21) so as to vary the ground distance (d) of said side skirts (10).

9. The motor vehicle according to Claim 8, wherein the electronic control unit (22) is programmed/configured to rotate the side skirts (10) according to said physical quantity(s) and/or vehicle parameters.

10. The motor vehicle according to Claim 8 or 9, wherein the electronic drive system (11) additionally comprises, for each side skirt (10), a position sensor that detects the angular position of the same side skirt (10).

11. The motor vehicle according to Claim 8, 9 or 10, wherein the electronic drive system (11) additionally comprises, for each side skirt (10), a decoupling device (24) that is interposed between the side skirt (10) and the respective actuator (21), and is structured to uncouple/ disconnect the side skirt (10) from the actuator (21), when the torque transmitted to and from the actuator (21) exceeds a predetermined maximum threshold.

12. The motor vehicle according to any one of the preceding claims, wherein the side skirt (10) comprises: a support shaft (14), which extends coaxially to the rotation axis (A) of said shirt substantially grazing said underbody (5), and is firmly fixed to said underbody (5) and/or to said vehicle body (2) with the capability of freely rotating about its longitudinal axis; and at least one flat panel (15) with a ribbonlike structure, which is fixed with its edge to said support shaft (14) so as to rotate about the rotation axis (A) of the skirt together with the same shaft.

13. The motor vehicle according to Claim 12, wherein said support shaft (14) is longitudinally divided into a plurality of distinct segments that are butt connected in angularly rigid manner to one another by means of drive joints (16); each segment of the support shaft (14) being adapted to support a respective flat panel (15).

14. The motor vehicle according to any one of the preceding claims, in which said side skirts (10) are located within respective housing seats (13) that are realized in the underbody (5) and/or in the vehicle body (2).

15. The motor vehicle according to Claim 14, wherein said side skirts (10), when in the raised position, are substantially entirely contained within their respective housing seats (13).
